# EUROPEAN PATENT APPLICATION

(11) **EP 2 778 965 A1**
(43) Date of publication of application: **17.09.2014**
(21) Application number: 14000895.4
(22) Date of filing: 12.03.2014
(51) Int. Cl.: G06F 17/30

(54) **Query processing system including data classification**

(30) Priority: 13.03.2013 US 201313800763
(71) Applicant: SAP AG, 69190 Walldorf (DE)
(72) Inventor: Lock, Hendrik, 69190 Walldorf (DE); Nitzschke, Andre, 69190 Walldorf (DE)
(74) Representative: Müller-Boré & Partner Patentanwälte PartG mbB

(57) **Abstract**

The present disclosure relates to computer-implemented methods, software, and systems for allowing a client to control characteristics of a response to a data query using data classification. One computer-implemented method includes receiving a request for a data set from a client, the request including one or more request parameters indicating one or more characteristics for a result set, identifying a set of disjointed classes associated with the data set, the identification based at least in part on the one or more request parameters, the set of classes comprises the entire data set, associating the set of classes with a set of class representatives, each class in the set of classes associated with a class representative from the set of class representatives, and presenting the set of class representatives to the client.

## Description

### TECHNICAL FIELD

The present disclosure relates to computer-implemented methods, software, and systems for allowing a client to control characteristics of a response to a data query using data classification.

### BACKGROUND

Data processing applications generally allow clients to store and retrieve data from data storage systems, such as databases. Such data processing applications may allow arbitrarily large sets of data to be stored and retrieved by the client, for example, to be presented to a user or analyst. The client may define the data it wishes to access in the form of a query sent to the data processing application, which may in turn respond with one or more result sets associated with the received query.

### SUMMARY

The present disclosure relates to computer-implemented methods, software, and systems for allowing a client to control characteristics of a response to a data query using data classification. One computer-implemented method includes receiving a request for a data set from a client, the request including one or more request parameters indicating one or more characteristics for a result set, identifying a set of disjointed classes associated with the data set, the identification based at least in part on the one or more request parameters, the set of classes comprises the entire data set, associating the set of classes with a set of class representatives, each class in the set of classes associated with a class representative from the set of class representatives, and presenting the set of class representatives to the client.

While generally described as computer-implemented software embodied on tangible media that processes and transforms the respective data, some or all of the aspects may be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

### DESCRIPTION OF DRAWINGS

FIG. 1 is a block diagram illustrating an example system for allowing a client to control characteristics of a response to a data query using data classification.
FIG. 2 is a block diagram illustrating an example interaction between a client and server for allowing the client to control characteristics of a response to a data query using data classification.
FIG. 3 is a diagram illustrating an example data classification scheme.
FIG. 4 is a diagram illustrating class representatives corresponding to data classes.
FIG. 5 is a diagram illustrating class representatives corresponding to data classes determined based on geography.
FIG. 6 is a flowchart of an example method for allowing a client to control characteristics of a response to a data query using data classification.
FIG. 7 is a flowchart of an example method for allowing a client to query data entries from a classified data set using class representation.

### DETAILED DESCRIPTION

The present disclosure generally relates to computer-implemented methods, software, and systems for allowing a client to control characteristics of a response to a data query using data classification.

In one aspect, the present disclosure describes a solution involving a client presenting a query associated with a resource to a server storing or managing that resource. Generally, the size of a response to such a query can be as large as the size of the requested resource. This unpredictability may lead to difficulties in processing the response. For example, the client may need to parse and/or convert the response into internal data formats. In some cases, the client may desire that the transferred response be processed in a given, limited amount of time. Because the processing resources of a client are limited in general but the cardinality of the response is unbound, the client may not be able to process the response at all, for instance because it does not fit into the client's memory, or because it would be too time consuming to do so. Further, the amount of information may be too excessive to present on particular clients such as, for example, a smartphone or tablet.

The present disclosure describes a solution that may aggregate data on the server in response to a query from the client, thus reducing the cardinality of the response. In some implementations, the server may aggregate many overlapping data points in a scatter plot into a single representative data point that indicates all data points. In some instances, this aggregation may be controlled by parameters included by the client with the query. The parameters may define a fixed upper boundary to the cardinality of a response to the query. The parameters may also define characteristics that indicate such an upper boundary, such as a maximum processing time for a response.

In some implementations, the server, in response to receiving a client query, aggregates all or a substantial plurality of data entries corresponding to the query into disjoint classes. Each class may represent a potentially empty set of data entries. In some cases, each class may be of a fixed size associated with or determined based on the parameters sent from or identified as associated with the client. The data classification may also be performed by any suitable algorithm or set of algorithms that ensure that responses to the query correspond to the parameters specified by the client.

In some implementations, the server associates each class with a class representative. Each class representative may include a set of keys that uniquely identify the class and, in some instances, a cardinality value indicating the number of data entries included in the class. In some instances, the server responds to the client query with the set of class representatives for the requested data set. The client may then send the client one or more of the class representatives in a subsequent request to retrieve the data entries associated with the classes indicated by the one or more class representatives.

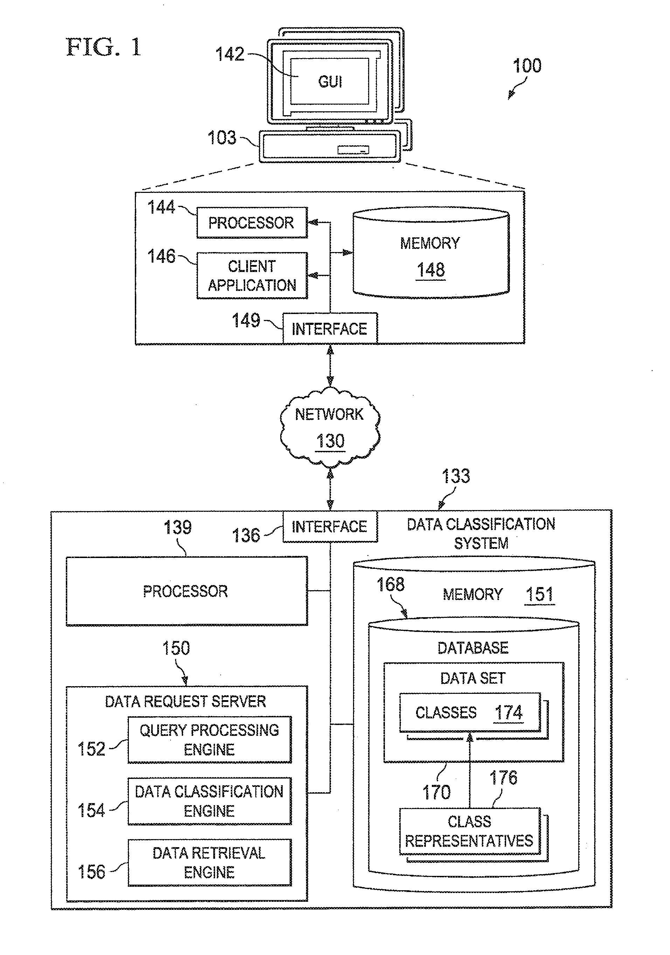

Referring now to FIG. 1, a block diagram is shown illustrating an example environment 100 for allowing a client to control characteristics of a response to a data query using data classification. Specifically, the illustrated system 100 includes or is communicably coupled with one or more clients 103 and a network 130.

The example environment 100 may include a data classification system 133. At a high level, the data classification system 133 comprises an electronic computing device operable to receive, transmit, process, store, or manage data and information associated with the environment 100. Specifically, the data classification system 133 illustrated in FIG. 1 may receive, retrieve, or otherwise identify queries from various clients, such as client 103, processing those queries to determine data classifications associated with those queries, returning class representatives to the clients, and then returning data entries corresponding to those class representatives in response to requests from the clients. In some cases, the data classification system 133 may receive indications and requests from one or more clients 103. These requests may include queries and requests for data corresponding to class representatives as described below.

As used in the present disclosure, the term "computer" is intended to encompass any suitable processing device: For example, although FIG. 1 illustrates a data classification system 133, environment 100 can be implemented using two or more servers, as well as computers other than servers, including a server pool. Indeed, data classification system 133 may be any computer or processing device such as, for example, a blade server, general-purpose personal computer (PC), Mac®, workstation, UNIX-based workstation, or any other suitable device. In other words, the present disclosure contemplates computers other than general purpose computers, as well as computers without conventional operating systems. Further, illustrated data classification system 133 may be adapted to execute any operating system, including Linux, UNIX, Windows, Mac OS®, Java™, Android™, iOS or any other suitable operating system. According to one implementation, data classification system 133 may also include or be communicably coupled with an e-mail server, a Web server, a caching server, a streaming data server, and/or other suitable server.

The data classification system 133 also includes an interface 136, a processor 139, and a memory 151. The interface 136 is used by the data classification system 133 for communicating with other systems in a distributed environment-including within the environment 100 - connected to the network 130, for example, the client 103, as well as other systems communicably coupled to the network 130 (not illustrated). Generally, the interface 136 comprises logic encoded in software and/or hardware in a suitable combination and operable to communicate with the network 130. More specifically, the interface 136 may comprise software supporting one or more communication protocols associated with communications such that the network 130 or interface's hardware is operable to communicate physical signals within and outside of the illustrated environment 100.

As illustrated in FIG. 1, the data classification system 133 includes a processor 139. Although illustrated as a single processor 139 in FIG. 1, two or more processors may be used according to particular needs, desires, or particular implementations of the environment 100. Each processor 139 may be a central processing unit (CPU), a blade, an application specific integrated circuit (ASIC), a field-programmable gate array (FPGA), or another suitable component. Generally, the processor 139 executes instructions and manipulates data to perform the operations of the data classification system 133. Specifically, the processor 139 may execute the functionality required to receive and respond to requests from the client 103, as well as to perform the data classification and retrieval operations described below.

The illustrated data classification system 133 also includes a data request server 150. In some implementations, the data request server 150 may receive queries from the one or more clients 103, perform data classification operations on the data set described by the query, and return class representatives to the client associated with the one or more classes identified by the data classification operations. The data request server 150 may be a single software program running on a single server, or it may be multiple software or hardware components distributed across one or more servers.

In the depicted implementation, the data request server 150 includes a query processing engine 152, a data classification engine 154, and a data retrieval engine 156. In some instances, the query processing engine 152 may be operable to process a query received from the one or more clients 103. This processing may include parsing the query to extract one or more request parameters specified by the client identifying one or more characteristics of a response. For example, a query received from the one or more clients 103 may include a structured query language (SQL) query specifying the data set the client wishes to retrieve, where the query includes or is associated with (e.g., including within the request including the query, etc.) a request parameter indicating the maximum cardinality of the set of classes into which to divide the data set. In this way, the client may specify the maximum size of the set of classes into which the data set will be divided. In another example, the request parameter may indicate the maximum cardinality of a set of data entries to be returned to the client in a response, thus allowing the client to specify the maximum number of data entries it will receive in response to a request.

In some implementations, the SQL query may be sent between the client 103 and the query processing engine 152 of the data classification system 133 using the Hypertext Transfer Protocol (HTTP). The SQL query may also be sent using any suitable protocol or mechanism, including, but not limited to, Simple Object Access Protocol (SOAP), JavaScript Object Notation (JSON), Remote Procedure Call (RPC), Extensible Markup Language (XML), Open Data Protocol (OData), or any other suitable protocol or mechanism or combination thereof.

In some instances, the query processing engine 152 may analyze the received query and perform one or more translations to alter the query for use by the data classification system 133. In some implementations, the query processing engine 152 may perform an analysis to determine the cardinality or size of the data set specified by the received query. This information may be used during data classification. In some cases, the query processing engine 152 may be a separate software or hardware process running within the data classification system 133. The query processing engine 152 may also be the component or module integrated within the data request server 150. In some instances, the query processing engine 152 may be a system external to data classification system 133.

In some cases, the data classification engine 154 may be located on a separate system external to the other components of the data classification system 133. Further, the present disclosure contemplates the various components of the data classification system 133 each being located on a separate system, all components being located on the same system, or come components being co-located on the same system and others being located on separate systems.

Data request server 150 may also include a data classification engine 154. In some implementations, data classification engine 154 may partition the data set identified by the query processing engine 152 into one or more classes. The one or more classes may be disjointed classes such that each data entry in the data set is included in one and only one of the one or more classes. Further, the one or more classes may completely cover the data set, such that each data entry in the data set is included in one of the one or more classes.

In some cases, the data classification engine 154 may execute an algorithm to perform the classification of the data set. In some instances, the algorithm may be operable to divide the data set into multiple equal size classes, each class corresponding to an equal size range of values. For example, one example algorithm might divide the data set into classes based only on the value of an attribute X. In such an example, a first class might include data entries having a value of X between 0 and 1, and a second class might include data entries having a value of X between 1 and 2. This algorithm is presented for exemplary purposes only, and the present disclosure contemplates the use of any suitable algorithm to perform this data classification, including, but not limited to, multidimensional classification algorithms classifying based on two or more attributes, classification algorithms that examine the data set to determine optimal classification schemes, classification algorithms specifically provided by the client, or any other suitable algorithm or combination of algorithms. In some implementations, the data classification engine 154 may perform classification on the data set in response to receiving a request for the data set. The data classification engine 154 may also perform classification of the data set prior to receiving a request, such as when the data is created or inserted. The data classification engine 154 may also perform classification each time data is requested, or may perform the classification once and use the pre-classified data to respond to requests.

The data classification engine 154 may also produce a set of class representatives corresponding to the set of classes produced during classification. In some implementations, each class representative corresponds to one class from the set of classes, and includes a set of keys uniquely identifying the associated class. Each conservator may also include other information about the associated class, such as, for example, a cardinality indicating the number of data entries included in the associated class.

In some instances, the data classification engine 154 may return the set of class representatives to the client 103 that sent the original request. In some implementations, the response may be sent to the client using the same protocol or mechanism used to communicate the original query between the client 103 in the query processing engine 152. The response may also be communicated by any other suitable protocol or mechanism.

In some implementations, classes may be defined using an algorithm that takes into account longitude and latitude for location based data and a parameter that determines granularity. Each geo-located data set can be represented by a class, and can be further broken by other criteria such as time or other criteria. In such a case, the number of classes is finite and bound by the granularity. For instance, incident data (related to car accidents, fires, etc) could be classified in this way. Average income, taxes, and other financial data could also be constrained to specific countries. In some cases, data could be classified by state (such as in the United States) or by federal state (in the European Union), by county, or by any other classification that denotes a well-defined grid.

The data request server 150 may further include a data retrieval engine 156. In some implementations, the data retrieval engine 156 may receive a request from the client 103 including one or more class representatives. The one or more class representatives included in the request may be a subset of the class representatives sent to the client by the data classification engine 154 in response to the original query. In response to receiving the request, the data retrieval engine 156 may process the one or more class representative to determine the classes to which they are associated. Once the data retrieval engine 126 determines the associated classes, the data retrieval engine 126 may retrieve the data entries associated with these classes, such as from the database 168. The data retrieval engine may then send these associated data entries to the client 103 in a response. In some implementations, each of the associated data entries may be sent to the client in a separate message. One or more associated data entries may also be sent a single message to the client. In some cases, the data retrieval engine 156 may return a reference or pointer to the client that the client may use to retrieve the one or more associated data entries. For example, the data retrieval engine 16 may return a result set object to the client 103. Using this result set object the client 103 may retrieve the data entries one at a time, may retrieve the entire data set it once, or may retrieve the data in any other desired fashion.

Regardless of the particular implementation, "software" may include computer-readable instructions, firmware, wired and/or programmed hardware, or any combination thereof on a tangible medium (transitory or non-transitory, as appropriate) operable when executed to perform at least the processes and operations described herein. Indeed, each software component may be fully or partially written or described in any appropriate computer language including C, C++, Java™, Visual Basic, assembler, Perl®, any suitable version of 4GL, as well as others. While portions of the software illustrated in FIG. 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components as appropriate.

The data classification system 133 also includes a memory 151, or multiple memories 151. The memory 151 may include any type of memory or database module and may take the form of volatile and/or non-volatile memory including, without limitation, magnetic media, optical media, random access memory (RAM), read-only memory (ROM), removable media, or any other suitable local or remote memory component. The memory 151 may store various objects or data, including caches, classes, frameworks, applications, backup data, jobs, web pages, web page templates, database tables, repositories storing static and/or dynamic information, and any other appropriate information including any parameters, variables, algorithms, instructions, rules, constraints, or references thereto associated with the purposes of the data classification system 133. Additionally, the memory 151 may include any other appropriate data, such as VPN applications, firmware logs and policies, firewall policies, a security or access log, print or other reporting files, as well as others.

As illustrated in FIG. 1, memory 151 includes or references data and information associated with and/or related to providing multiple process intelligence views related to running business applications. As illustrated, memory 151 includes a database 168. The database 168 may be one of or a combination of several commercially available database and non-database products. Acceptable products include, but are not limited to, SAP® HANA DB, SAP® MaxDB, Sybase® ASE, Oracle® databases, IBM® Informix® databases, DB2, MySQL, Microsoft SQL Server®, Ingres®, PostgreSQL, Teradata, Amazon SimpleDB, and Microsoft® Excel, as well as other suitable database and non-database products. Further, database 168 may be operable to process queries specified in any structured or other query language such as, for example, SQL. In some instances, the database 168 may be a high-performance database management system (DBMS) that primarily relies on volatile electronic memory, such as random access memory (RAM), as opposed to magnetic, optical, removable, or other suitable non-electronic memory, for storage, retrieval, and processing of data. The reliance on electronic memory allows, in some implementations, for near-real-time aggregation, replication, synchronization, and processing of data. In some implementations, a persistency layer ensures that a copy of the in-memory database is maintained on non-volatile magnetic, optical, removable, or other suitable non-electronic memory in the event of a power or other system failure to allow recovery of the in-memory database.

Database 168 may include different data items related to classifying data to limit the size of response to a client. The illustrated database 168 includes a data set 170, one or more classes 174 associated with the data set 170, and one or more class representatives 176 associated with the one or more classes 174. In other implementations, the database 168 may contain any additional information necessary to support the particular implementation.

In the illustrated implementation, the database 168 includes a data set 170. In some implementations, the data set 170 is identified by the query processing engine 152 in response to receiving a query from the client 103. The data set 170 may correspond to the data responsive to the received query. In some implementations, the data set 170 is a subset of a larger data set included in database 168. The data set 170 may include one or more data entries representing individual records within the data set. In some implementations, the one or more data entries include rows within one or more tables within the database 168. The one or more data entries may also correspond to other structures within the database 168, such as objects, stored procedures, triggers, or any other data or metadata construct.

The database 168 may also include a set of classes 174. In some implementations, the set of classes 174 is produced by the data classification engine 154 to represent the results of its data classification operation. As described previously, the set of classes 174 may be a disjointed set such that none of the classes overlap, and may offer complete coverage of the data set 170 such that every data entry in the data set 170 is covered by exactly one class from the set of classes 174. In some implementations, the classes 174 may be stored as additional rows in tables in the database 168 specifying the boundaries of each class in the set of classes. The classes 174 may also be stored as temporary tables created by the data classification engine 154 during data classification. In some implementations, the temporary tables corresponding to the classes 174 may exist while the query associated with the classes is still valid or in scope, and may be deleted or otherwise purged when the query is no longer valid.

In some implementations, the database 168 may also include a set of class representatives 176. The class representatives 176 may be produced by the data classification engine 154 during data classification. As described previously, the class representatives 176 may each correspond to one of the classes 174, and may be returned to the client in response to the initial query. The client may subsequently retrieve the data entries associated with one of the classes 174 by specifying the corresponding class representative from the set of class representatives 176. In some implementations, the class representatives 176 are stored in the database 168 in a similar manner to the classes 174. The class representatives 176 may also be stored in a different manner than the classes 174.

The illustrated environment of FIG. 1 also includes the client 103, or multiple clients 103. The client 103 may be any computing device operable to connect to or communicate with at least the data classification system 133 via the network 130 using a wireline or wireless connection. In general, the client 103 comprises an electronic computer device operable to receive, transmit, process, and store any appropriate data associated with the environment 100 of FIG. 1.

There may be any number of clients 103 associated with, or external to, the environment 100. For example, while the illustrated environment 100 includes one client 103, alternative implementations of the environment 100 may include multiple clients 103 communicably coupled to the data classification system 133 and/or the network 130, or any other number suitable to the purposes of the environment 100. Additionally, there may also be one or more additional clients 103 external to the illustrated portion of environment 100 that are capable of interacting with the environment 100 via the network 130. Further, the term "client" and "user" may be used interchangeably as appropriate without departing from the scope of this disclosure. Moreover, while the client 103 is described in terms of being used by a single user, this disclosure contemplates that many users may use one computer, or that one user may use multiple computers.

The illustrated client 103 is intended to encompass any computing device such as a desktop computer, laptop/notebook computer, wireless data port, smart phone, personal data assistant (PDA), tablet computing device, one or more processors within these devices, or any other suitable processing device. For example, the client 103 may comprise a computer that includes an input device, such as a keypad, touch screen, or other device that can accept user information, and an output device that conveys information associated with the operation of the data classification system 133 or the client 103 itself, including digital data, visual information, or a graphical user interface (GUI). In some implementations, the client may 103 may be an automated system using the data from the data classification system 133 for additional analysis with or without human interaction.

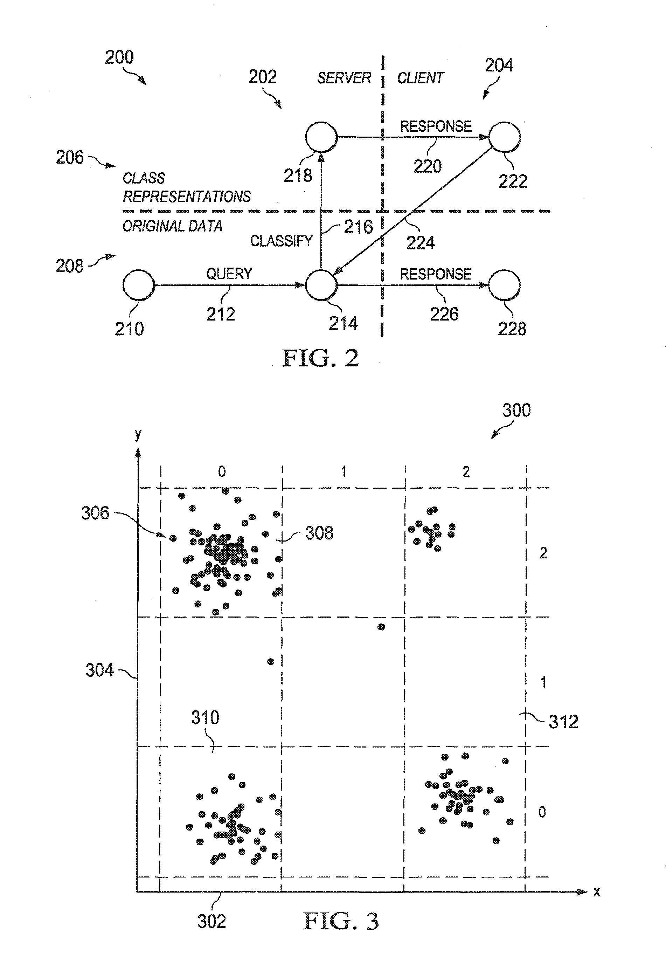

FIG. 2 is a block diagram illustrating an example interaction 200 between a client and server for allowing the client to control characteristics (e.g., an upper bound on the size of the response) of a response to a data query using data classification. The diagram is divided horizontally into a server section 202, and a client section 204. The server section 202 includes actions taken by the server, and the client section 204 includes actions taken by the client. In addition, diagram is divided vertically into a class representatives section 206, and an original data section 208. These sections of the diagram indicate which actions relate to the original data entries from the data set and which relate to the class representations associated with the classes into which the original data set has been divided.

Circle 210 represents the full data set stored by the server. The data set 214 associated with the query 212 sent by the client to the server may be a subset of the query data set. The query 212 may be executed against the full data set 210 to produce a query data set 214. As described previously, the query data set 214 may be identified by executing the query 212 against the full data set 210. The server may receive the query 212 from the client, as described relative to example FIG. 1. In some implementations, the query may identify data entries from disparate tables and collect them into a single query data set. The query may be any statement or statements in a query language supported by the server 202, including, but not limited to, SQL, Calculation Views (e.g., CalcViews), or any other suitable query language.

The query set 214 is then classified (arrow 216) to produce a set of class representatives 218. As discussed previously, the class representatives 218 are associated with a disjoint set of classes covering the entire query data set 214. The set of class representatives 218 may then be sent to the client in a response (arrow 220), providing the client with a set of class representatives 222. The client may then send a select request (arrow 224) to the server, where the select request (arrow 224) includes one or more of the class representatives 222. The server may then execute the select request (arrow 224) against the query set 214. As discussed with regard to the examples of FIG. 1, the server may execute an algorithm using the received class representatives to identify the classes associated with the received class representatives. Once the server has identified the requested classes, the server can identify and return the data entries associated with those classes to the client in a suitable response (arrow 226). The client then receives, and can present, a set of data entries 228 corresponding to the one or more class representatives identified in the select request (arrow 224).

FIG. 3 is a diagram illustrating an example data graph 300. The data graph 300 itself includes an x-axis 302 and a y-axis 304. The x-axis 302 and y-axis 304 represent values associated with data entries in the data set. Although the illustrated implementation includes two keys and thus is a two dimensional mapping, single dimensional (e.g., linear) and multidimensional mappings are also contemplated by the present disclosure.

The illustrated implementation includes a number of data points 306. Each data point 306 may represent one data entry in the data set, with the data point's position on the diagram relative to the x- and y-axes indicating its associated key values. In a multidimensional mapping, a data point's position relative to the multiple axes may represent values for the different keys associated with the axes. For example, in a three-dimensional mapping each of the data points 306 would appear as a point in the three-dimensional cube formed by the three axes of the graph.

The data graph 300 may include one or more partitions, such as those identified by reference numbers 308, 310, 312. In some implementations, the partitions represent the different classes into which the data set represented by the graph 300 has been divided. In the illustrated implementation, the classification scheme includes a grid with fixed size partitions. Each partition includes data entries with values of X and Y falling within a certain range. For example, partition 308 may include data entries with values of Y between 2 and 3 and values of X between 0 and 1, whereas partition 310 may include data entries with values of X between 0 and 1 and values ofY between 0 and 1.

In some implementations, the graph 300 shows the result of the classification operation such as that described with respect to FIG. 1. In the illustrated implementation, each partition represents a single class. Each class represented by a partition may also be associated with a class representative identifying the class. For example, the class associated with partition 308 may be associated with a class representative including the keys 0 and 2 representing the values of X and Y associated with the class. The class representative may also include or be associated with a cardinality value representing the number of data entries included in the class. In the illustrated implementation, this cardinality may be equal to the number of data points falling within partition 308.

The illustrated graph 300 also includes an empty partition 312. In some implementations, the data classification operation may lead to classes including no data entries. Such classes may be represented by an empty set having a cardinality of 0.

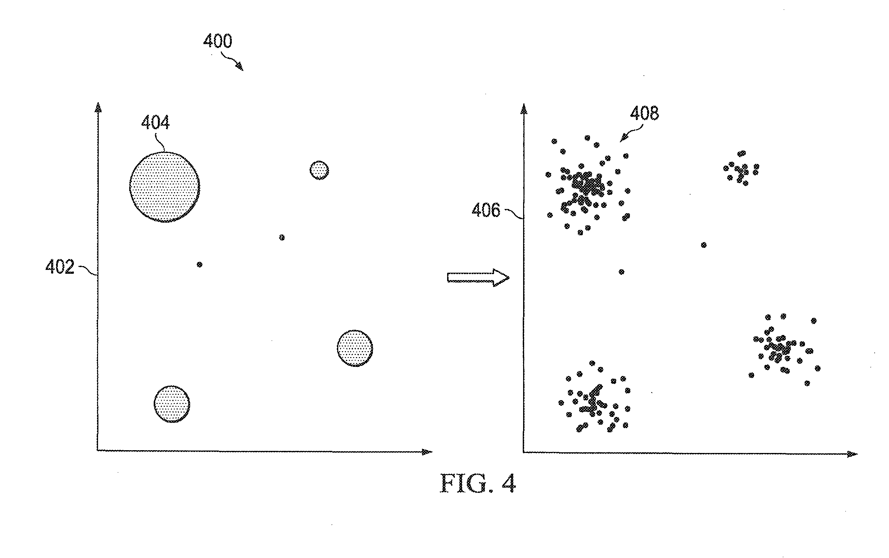

Referring now to FIG 4, diagram 400 illustrates class representatives corresponding to data classes. The diagram 400 includes two graphs 402 and 406. Graph 402 provides a visual representation of example class representatives associated with the data entries 408 plotted on graph 406. For example, the class representative 404, which is shown as a large solid data point, may represent the cluster of data 408 in graph 406. In such an implementation, the cluster data points 408 may be included in the same class, and the class representative 404 may be used to refer to this class. Although the class representatives in graph 402 are shown as circles, the present disclosure contemplates different forms of class representatives represented as different shapes. For example, in a grid classification scheme, the class representative for a certain class may be plotted as a solid square taking up the entire grid square associated with that class. Further, in other classification schemes, the class representatives may be plotted as any suitable shape. In multidimensional classification schemes, the class representatives may be plotted as shapes including as many dimensions as are included in the classification scheme.

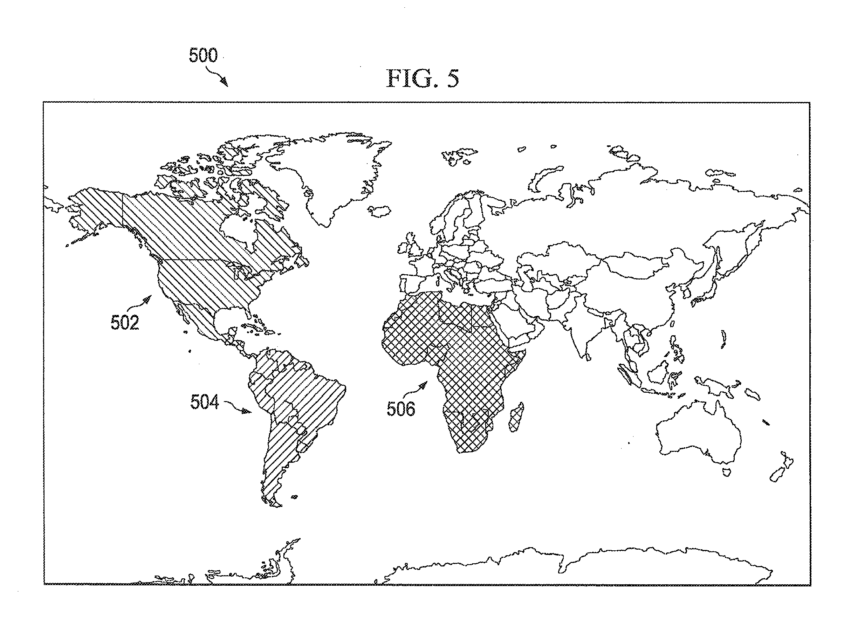

FIG. 5 is a diagram 500 illustrating class representatives corresponding to data classes determined based on geography. In the illustrated diagram 500, the class representative 502 represents a class including data associated with North America. For example, sales data associated with or produced by North American business interested may be included in the class represented by class representative 502. The class representative 504 may represent a class including data associated with South America, and the class representative 506 may represent a class including data associated with Africa. In some implementations, the class representatives 502, 504 and 506 may include keys associated with the specific geographic regions they represent. The class representatives 502, 504, and 506 may also include numeric or other identifiers that are present in the underlying data linking the data to the geographic regions. In some implementations, the class representatives 502, 504, and 506 could be used by an interface to allow a user to zoom in or examine in more detail data for a particular geographic region. For example, a user desiring to view data associated with North America may click on that region on a map presented in a user interface, causing the interface to send the associated class representative 502 to a data classification system to retrieve the associated data. In some implementations, a max size for the different classifications (e.g., grid cells) may be enforced.

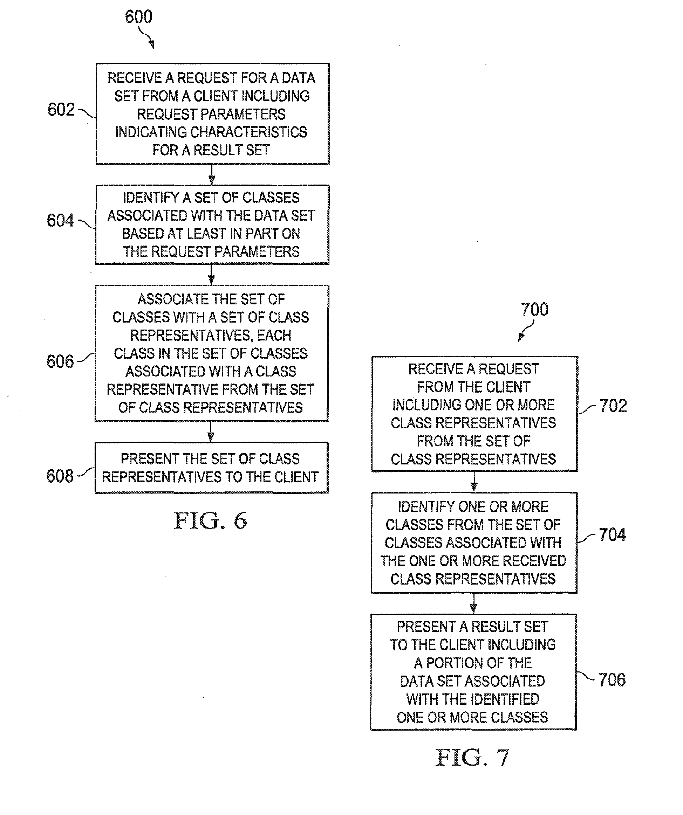

FIG. 6 is a flowchart of an example method 600 for allowing a client to control characteristics of a response to a data query using data classification. For clarity of presentation, the description that follows generally describes method 600 in the context of system 100 illustrated in FIG. 1. However, it will be understood that method 600 may be performed, for example, by any other suitable system, environment, or combination of systems and environments, as appropriate.

At 602, the request is received for a data set from a client including request parameters indicating characteristics for a result set. In some implementations, the request may be received from the client over a network, as described relative to FIG. 1. The request may also include a query defining the requested data set in a language such as SQL, or any other suitable query or data definition language. As discussed previously, the request parameters may include a maximum cardinality of a response that the client can support. The request parameters may also include a maximum time that may be spent processing responses. The request parameters may also include any additional suitable parameter a client may wish to impose on a result set. In some instances, the request parameters may include a set of capabilities associated with the requesting client, such as, for example, an amount of memory associated with the client, a processor speed associated with the client, and hardware profile associated with the client, a screen resolution associated with the client, or any other suitable capability.

At 604, a set of classes associated with the data set is identified based at least in part on the request parameters. As discussed relative to FIG. 1, the identification of classes may include dividing data entries in the data set into static, disjointed classes, such that the classes cover the entire data set. In some implementations, the identification of classes may include executing one or more algorithms to determine the boundaries of the classes associated with the data set, and to map the data entries within the data set to the one or more classes. In some instances, the identification of classes may include analyzing the data in the data set to determine the class structure. The identification of classes may also include examining the capabilities of the client, and structuring the classes such that the client can process them.

At 606, the set of classes is associated with a set of class representatives, each class representative in the set of classes is associated with a class representative from the set of class representatives. In some implementations, each class representative may include a set of keys uniquely identifying the associated class, as well as other attributes associated with the class, such as, for example, a cardinality value. At 508, the set of class representatives is presented to the client. In some implementations, this may include sending the client one more messages via a network including the class representatives.

Referring now to FIG 7, a flowchart illustrates example method 700 for allowing a client to query data entries from a classified data set using class representation. For clarity of presentation, the description that follows generally describes method 700 in the context of system 100 illustrated in FIG. 1. However, it will be understood that method 700 may be performed, for example, by any other suitable system, environment, or combination of systems and environments, as appropriate.

At 702, a request is received from the client including one or more class representatives from the set of class representatives. In some implementations, the one or more class representatives include the class representatives presented to the client at 508 of method 500. At 704, one or more classes are identified from the set of classes associated with the one or more receive class representatives. In some instances, this identification includes applying the inverse of a function used to generate the class representative to identify the associated class. The identification may also include performing a lookup into a database mapping the class representatives to their associated classes. At 706, a result set is presented to the client including a portion of the data set associated with the identified one or more classes.

The preceding figures and accompanying descriptions illustrate example processes and computer implementable techniques. But system 100 (or its software or other components) contemplates using, implementing, or executing any suitable technique for performing these and other tasks. It will be understood that these processes are for illustration purposes only and that the described or similar techniques may be performed at any appropriate time, including concurrently, individually, or in combination. In addition, many of the steps in these processes may take place simultaneously, concurrently, and/or in different orders than as shown. Moreover, system 100 may use processes with additional steps, fewer steps, and/or different steps, so long as the methods remain appropriate.

In other words, although this disclosure has been described in terms of certain implementations and generally associated methods, alterations and permutations of these implementations and methods will be apparent to those skilled in the art. Accordingly, the above description of example implementations does not define or constrain this disclosure. Other changes, substitutions, and alterations are also possible without departing from the spirit and scope of this disclosure.

## Claims

1. A computer-implemented method performed by one or more processors, the method comprising:
receiving a request for a data set from a client, the request including one or more request parameters indicating one or more characteristics for a result set;
identifying a set of disjointed classes associated with the data set, the identification based at least in part on the one or more request parameters, the set of classes comprises the entire data set;
associating the set of classes with a set of class representatives, each class in the set of classes associated with a class representative from the set of class representatives; and
presenting the set of class representatives to the client.

2. The method of claim 1 further comprising:
receiving a request from the client identifying one or more class representatives from the presented set of class representatives;
identifying one or more classes from the set of classes associated with the one or more identified class representatives; and
presenting a result set to the client, the result set including a portion of the data set associated with the identified one or more classes.

3. The method of anyone of claims 1 to 2, wherein the one or more request parameters include a maximum cardinality for a result set to be presented to the client.

4. The method of any one of claims 1 to 3, wherein the one or more request parameters include a maximum time to present the result set; and/or
wherein the one or more request parameters are included in a query defming the requested data set.

5. The method of anyone of claims 1 to 4, wherein identifying the set of classes associated with the data set includes dividing the data into a grid including a plurality of sectors, each sector conforming to the one or more characteristics for a result set indicated by the one or more request parameters; and/or
wherein identifying the set of classes associated with the data set includes dividing the data into a plurality of groups, each group conforming to the one or more characteristics for a result set indicated by the one or more request parameters, and each group chosen based at least in part on examining the data in the requested data set.

6. A computer program product encoded on a tangible, non-transitory storage medium, the product comprising computer readable instructions for causing one or more processors to perform operations comprising:
receiving a request for a data set from a client, the request including one or more request parameters indicating one or more characteristics for a result set;
identifying a set of disjointed classes associated with the data set, the identification based at least in part on the one or more request parameters, the set of classes comprises the entire data set;
associating the set of classes with a set of class representatives, each class in the set of classes associated with a class representative from the set of class representatives; and
presenting the set of class representatives to the client.

7. The computer program product of claim 6, the operations further comprising:
receiving a request from the client identifying one or more class representatives from the presented set of class representatives;
identifying one or more classes from the set of classes associated with the one or more identified class representatives; and
presenting a result set to the client, the result set including a portion of the data set associated with the identified one or more classes.

8. The computer program product of any one of claims 6 to 7, wherein the one or more request parameters include a maximum cardinality for a result set to be presented to the client.

9. The computer program product of any one of claims 6 to 8, wherein the one or more request parameters include a maximum time to present the result set; and/or
wherein the one or more request parameters are included in a query defining the requested data set.

10. The computer program product of any one of claims 6 to 9, wherein identifying the set of classes associated with the data set includes dividing the data into a grid including a plurality of sectors, each sector conforming to the one or more characteristics for a result set indicated by the one or more request parameters; and/or
wherein identifying the set of classes associated with the data set includes dividing the data into a plurality of groups, each group conforming to the one or more characteristics for a result set indicated by the one or more request parameters, and each group chosen based at least in part on examining the data in the requested data set.

11. A system, comprising:
memory for storing data; and
one or more processors operable to:
receive a request for a data set from a client, the request including one or more request parameters indicating one or more characteristics for a result set;
identify a set of disjointed classes associated with the data set, the identification based at least in part on the one or more request parameters, the set of classes comprises the entire data set;
associate the set of classes with a set of class representatives, each class in the set of classes associated with a class representative from the set of class representatives; and
present the set of class representatives to the client.

12. The system of claim 11, the processors further operable to:
receive a request from the client identifying one or more class representatives from the presented set of class representatives;
identify one or more classes from the set of classes associated with the one or more identified class representatives; and
present a result set to the client, the result set including a portion of the data set associated with the identified one or more classes.

13. The system of any one of claims 11 to 12, wherein the one or more request parameters include a maximum cardinality for a result set to be presented to the client.

14. The system of any one of claims 11 to 13, wherein the one or more request parameters include a maximum time to present the result set; and/or
wherein the one or more request parameters are included in a query defining the requested data set.

15. The system of any one of claims 11 to 14, wherein identifying the set of classes associated with the data set includes dividing the data into a grid including a plurality of sectors, each sector conforming to the one or more characteristics for a result set indicated by the one or more request parameters.
